(19) **Europäisches Patentamt / European Patent Office / Office européen des brevets**

(11) **EP 2 334 531 B1**

(12) ## EUROPÄISCHE PATENTSCHRIFT

(45) Veröffentlichungstag und Bekanntmachung des Hinweises auf die Patenterteilung:
**30.05.2018 Patentblatt 2018/22**

(21) Anmeldenummer: **09782857.8**

(22) Anmeldetag: **10.09.2009**

(51) Int Cl.:
*B60W 10/06* (2006.01)   *B60W 10/08* (2006.01)
*B60W 20/00* (2016.01)   *B60W 30/18* (2012.01)
*B60W 50/08* (2012.01)   *B60K 6/20* (2007.10)

(86) Internationale Anmeldenummer:
**PCT/EP2009/061737**

(87) Internationale Veröffentlichungsnummer:
**WO 2010/037619 (08.04.2010 Gazette 2010/14)**

(54) **VERFAHREN ZUM BETREIBEN EINES FAHRZEUGS MIT EINEM HYBRIDEN MOTORSYSTEM SOWIE MOTORSYSTEM UND FAHRZEUG**

METHOD FOR OPERATING A VEHICLE HAVING A HYBRID MOTOR SYSTEM, AND MOTOR SYSTEM AND VEHICLE

PROCÉDÉ DE FONCTIONNEMENT D'UN VÉHICULE À SYSTÈME DE MOTEUR HYBRIDE, AINSI QUE SYSTÈME DE MOTEUR ET VÉHICULE CORRESPONDANTS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **01.10.2008 DE 102008042544**

(43) Veröffentlichungstag der Anmeldung:
**22.06.2011 Patentblatt 2011/25**

(73) Patentinhaber: **Robert Bosch GmbH
70442 Stuttgart (DE)**

(72) Erfinder:
• **FALKENSTEIN, Jens-Werner
73434 Aalen (DE)**
• **HELLMANN, Manfred
71706 Hardthof (DE)**
• **KUSTOSCH, Mario
71665 Vaihingen/Enz (DE)**

(56) Entgegenhaltungen:
**DE-A1- 19 648 055    DE-A1-102004 049 324
DE-A1-102006 007 983    DE-A1-102006 013 676
DE-A1-102007 002 734**

EP 2 334 531 B1

**Beschreibung**

Technisches Gebiet

Die Erfindung betrifft Antriebssysteme für Fahrzeuge mit einem Verbrennungsmotor und einem weiteren alternativen Antrieb, wobei insbesondere die Wirtschaftlichkeit und Umweltfreundlichkeit des Verbrennungsmotors optimiert sind.

Stand der Technik

Bei Fahrzeugen, die sowohl über einen Verbrennungsmotor als auch über einen weiteren alternativen Antrieb, wie z.B. einen elektrischen Antrieb mithilfe von Elektromotoren, verfügen, wie z.B. Fahrzeuge mit Hybridantriebssystemen, kann der üblicherweise durch ein Fahrpedal vorgegebene Vortriebswunsch des Fahrers, der im Allgemeinen als Fahrerwunschmoment FWM, bezeichnet wird, durch einen der Antriebe oder auch von beiden Antrieben gemeinsam bereitgestellt werden. Im letzteren Fall stellen sowohl der Verbrennungsmotor als auch der alternative Antrieb jeweils ein Teilmoment zum Antreiben des Fahrzeugs bereit, wobei die Aufteilung der Teilmomente abhängig von Fahrzeugzuständen eingestellt werden kann, z.B. abhängig von der Ladungskapazität der Energiequelle, die den alternativen Antrieb versorgt. Fordert der Fahrer ein größeres Antriebsmoment an als der Verbrennungsmotor alleine zur Verfügung stellen kann, so wird in allen Fällen für einen gewissen Zeitraum der alternative Antrieb hinzu geschaltet, um das Fahrerwunschmoment zu realisieren.
Das Betreiben des Verbrennungsmotors in der Nähe des maximalen Antriebsmoments oder mit dem maximal möglichen Antriebsmoment (Volllast) kann sich negativ auf den Verbrauch, die Abgasqualität und den Verschleiß von Motor und Triebstrangkomponenten auswirken. So muss z.B. bei Ottomotoren, insbesondere bei aufgeladenen Motoren, in der Nähe der Volllast angefettet werden (Lambda <1), um eine thermische Überlast zu verhindern. Die Anfettung kann auch für eine Leistungssteigerung genutzt werden. Durch diese Maßnahme erhöht sich jedoch der Verbrauch und der Ausstoß von CO und HC-Abgasanteilen.
Bei Dieselmotoren steigt bei Volllast bzw. in der Nähe der Volllast der Rußausstoß deutlich an.
Aus der Offenlegungsschrift DE 10 2007 002 734 A1 ist außerdem bereits ein Verfahren zum Betreiben eines Hybridantriebs eines Fahrzeugs bekannt, wobei ein Verbrennungsmotor in mindestens einem Betriebsbereich mit homogener Verbrennung betrieben wird und der Hybridantrieb wahlweise im seriellen oder parallelen Modus betreibbar ist. Aus der Offenlegungsschrift DE 10 2006 007 983 A1 geht weiterhin ein Verfahren zum Betreiben eines Hybridantriebs hervor, wobei Verbrennungsmotor und Elektromotor des Hybridantriebs im parallelen Modus betrieben werden und zur Verbrauchsoptimierung eine Zylinderabschaltung vorgesehen ist.
Es ist Aufgabe der vorliegenden Erfindung, ein Motorsystem für ein Fahrzeug sowie ein Verfahren zum Betreiben eines Motorsystems für ein Fahrzeug zur Verfügung zu stellen, wobei das Motorsystem so betrieben wird, dass negative Effekte hinsichtlich des Verbrauchs, der Abgasqualität und de Verschleißes von Motor und Triebstrangkomponenten weitestgehend vermieden werden.

Offenbarung der Erfindung

Diese Aufgabe wird gelöst durch das Verfahren zum Betreiben eines Motorsystems für ein Fahrzeug gemäß Anspruch 1 sowie durch das Motorsystem und das Fahrzeug gemäß den nebengeordneten Ansprüchen.
Weitere vorteilhafte Ausgestaltungen der Erfindung sind in den abhängigen Ansprüchen angegeben.
Gemäß einem ersten Aspekt ist ein Verfahren zum Betreiben eines hybriden Motorsystems mit einer ersten Antriebseinheit, insbesondere einem Verbrennungsmotor, und einer zweiten Antriebseinheit, insbesondere einem Elektromotor, vorgesehen. Das Verfahren umfasst die folgenden Schritte:

- Ansteuern der ersten Antriebseinheit und der zweiten Antriebseinheit, so dass die erste Antriebseinheit und die zweite Antriebseinheit jeweils eine Ausgangsgröße bereitstellen, um eine Gesamtausgangsgröße bereitzustellen;
- Begrenzen der von der ersten Antriebseinheit bereitgestellten Ausgangsgröße auf einen Grenzwert, der kleiner ist als eine maximal von der ersten Antriebseinheit bereitstellbare Ausgangsgröße ,
- Aufheben des Begrenzens, wenn die von der zweiten Antriebseinheit bereitgestellte Ausgangsgröße einer maximalen von der zweiten Antriebseinheit bereitstellbaren Ausgangsgröße entspricht.

Der Grenzwert kann bezüglich eines Betriebsaspektes der ersten Antriebseinheit optimiert sein. Der Betriebsaspekt, bezüglich dessen das Grenzmoment optimiert ist, kann einem Wirkungsgrad und/oder einer Abgasemissionsrate und/oder einer Verschleißrate des Verbrennungsmotors und/oder einer Triebstrangkomponente entsprechen.
Das Begrenzen kann abhängig von einem oder mehreren Betriebszuständen des Motorsystems und/oder einer externen Bedingung aufgehoben werden.
Eine Idee des oben beschriebenen Verfahrens besteht darin, die von der ersten Antriebseinheit bereitgestellten Ausgangsgröße, wie z.B. einem Teilmoment, auf einen Grenzwert, z.B. ein Grenzantriebsmoment, zu beschränken, bei dem der Betrieb der ersten Antriebseinheit hinsichtlich eines Betriebsaspektes, wie z.B. hinsichtlich der Abgasqualität und/oder hinsichtlich des Wirkungsgrades und/oder hinsichtlich des Verschleißes von Motor und Betriebsstrangkomponenten gegenüber demjenigen Wirkungsgrad, derjenigen Abgasqualität bzw. demjenigen Verschleiß nahe oder bei einer maximalen Ausgangsgröße der ersten Antriebseinheit, z.B. einem maximalen Antriebsmoment, verbessert ist. Dieser Grenzwert, z.B. das Grenzantriebsmoment, wird in geeigneter Weise vordefiniert und begrenzt die von der ersten Antriebseinheit bereitgestellte Ausgangsgröße. Insbesondere kann abhängig von Betriebszuständen des Motorsystems, von Fahrzuständen eines mit dem Motorsystem ausgestatteten Fahrzeugs oder externen Bedingungen eine sich aus der maximalen Ausgangsgröße der ersten Antriebseinheit und dem Grenzwert ergebende Betriebsreserve freigegeben werden und zum Antrieb des Fahrzeugs bereitgestellt werden oder nicht. Wird bei Nichtvorliegen der betreffenden Fahrzeugzustände und externen Bedingungen eine höhere Gesamtausgangsgröße gefordert, wird die dazu notwendige zusätzliche Ausgangsgröße soweit verfügbar von dem alternativen Antrieb bereitgestellt.

Weiterhin kann die maximale, von der zweiten Antriebseinheit bereitstellbare Ausgangsgröße von einem Betriebszustand des Motorsystems, insbesondere einem Ladungszustand einer elektrischen Energiequelle, abhängen.

Gemäß einer weiteren Ausführungsform kann das Ansteuern der ersten Antriebseinheit und der zweiten Antriebseinheit gemäß einer vorgegebenen Motormanagementstrategie so durchgeführt werden, dass die Motormanagementstrategie eine Angabe über ein Verhältnis der Ausgangsgrößen zueinander bereitstellt, wobei die Motormanagementstrategie einen Ladungszustand einer elektrischen Energiequelle berücksichtigt.

Weiterhin kann der Betriebszustand zum Aufheben des Begrenzens vorliegen, wenn ein Kickdown festgestellt wird, bei dem ein Fahrpedal eines mit dem Motorsystem ausgestatteten Fahrzeug mindestens mit einer vorbestimmten Änderungsgeschwindigkeit vollständig ausgelenkt wird.

Alternativ oder zusätzlich kann der Betriebszustand zum Aufheben des Begrenzens vorliegen, wenn eine Drehzahl der ersten Antriebseinheit unterhalb eines Drehzahlschwellwerts und eine Last an dem Motorsystem festgestellt werden, die größer ist als ein Lastschwellwert.

Weiterhin wird erfindungsgemäß die Zeitdauer des Aufhebens des Begrenzens auf eine Maximalzeitdauer festgelegt. Insbesondere kann die Maximalzeitdauer abhängig von dem einen oder den mehreren Betriebszuständen festgelegt werden.

Insbesondere kann die Ausgangsgröße der Antriebseinheiten einem Antriebsmoment, einer Antriebsleistung oder einer davon abhängigen Größe entsprechen.

Gemäß einem weiteren Aspekt ist eine Vorrichtung zum Betreiben eines hybriden Motorsystems vorgesehen, das eine erste Antriebseinheit, insbesondere einem Verbrennungsmotor, und eine zweite Antriebseinheit, insbesondere einem Elektromotor, aufweist. Die Vorrichtung umfasst:

- eine Motormanagementeinheit, die ausgebildet ist, um die erste Antriebseinheit und die zweiten Antriebseinheit anzusteuern, so dass die erste Antriebseinheit und die zweite Antriebseinheit jeweils eine Ausgangsgröße bereitstellen, um eine Gesamtausgangsgröße bereitzustellen;
- eine Begrenzungseinheit, um das von der ersten Antriebseinheit bereitgestellte Ausgangsgröße auf einen Grenzwert zu begrenzen, der kleiner ist als eine maximal von der ersten Antriebseinheit bereitstellbare Ausgangsgröße,
- eine Steuereinheit, die mit der Begrenzungseinheit gekoppelt ist, um das Begrenzen abhängig von einem oder mehreren Betriebszuständen des Motorsystems und/oder einer externen Bedingung aufzuheben, wenn die von der zweiten Antriebseinheit bereitgestellte Ausgangsgröße einer maximalen, von der zweiten Antriebseinheit bereitstellbaren Ausgangsgröße entspricht.

Gemäß einem weiteren Aspekt ist ein Motorsystem mit einer ersten Antriebseinheit, mit einer zweiten Antriebseinheit und mit der obigen Vorrichtung vorgesehen.

Gemäß einem weiteren Aspekt ist ein Fahrzeug mit dem obigen Motorsystem vorgesehen.

Kurze Beschreibung der Zeichnungen

Bevorzugte Ausführungsformen der Erfindung werden nachfolgend anhand der beigefügten Zeichnungen näher erläutert. Es zeigen:

Fig. 1 eine schematische Blockdarstellung des Motorsystems zum Betrieb eines Fahrzeugs; und
Fig. 2 ein Momenten-Zeit-Diagramm von von einem Verbrennungsmotor und einem Elektromotor bereitgestellten Teilmomente bei kontinuierlich ansteigendem Fahrerwunschmoment.

Beschreibung von Ausführungsformen

Die nachfolgend beschriebenen Ausführungsformen betreffen Motorsysteme für Fahrzeuge, insbesondere Motorsysteme mit einer ersten Antriebseinheit, bei deren Betrieb dessen Wirkungsgrad und/oder dessen Emissionen und/oder dessen Verschleißverhalten bei einem maximalen Lastmoment bzw. in der Nähe des maximalen Lastmoments nicht optimal ist. Dies ist beispielsweise bei Verbrennungsmotoren der Fall.

Insbesondere betreffen die nachfolgend ausgeführten Ausführungsformen Motorsysteme für Hybridfahrzeuge, also Motorsysteme, die neben dem Verbrennungsmotor eine weitere alternative zweite Antriebseinheit aufweisen. Die zweite Antriebseinheit kann insbesondere in Form eines von einer elektrischen Energiequelle angetriebenen Elektromotors ausgebildet sein.

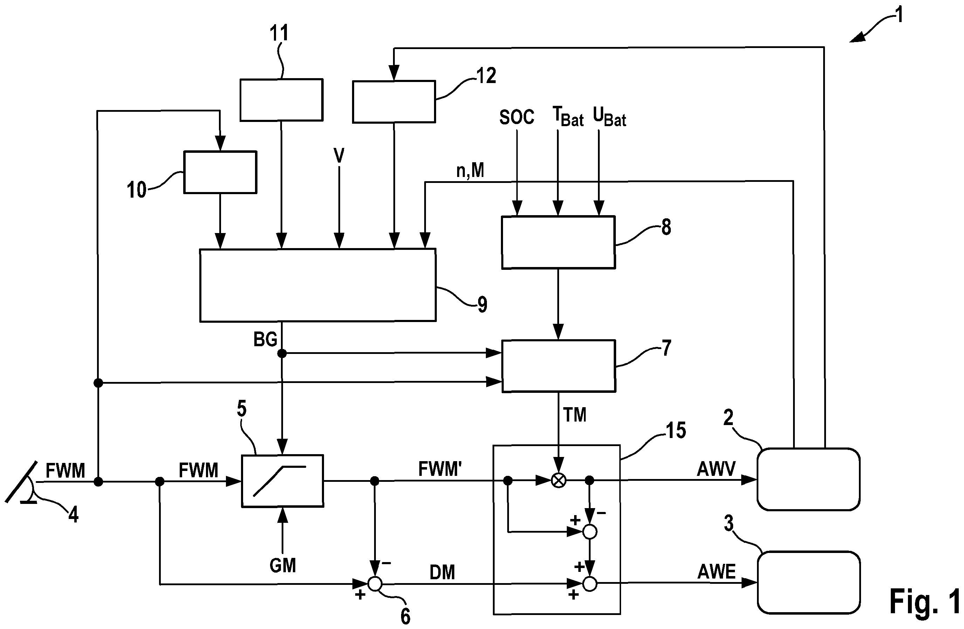

In Fig. 1 ist ein Motorsystem 1 dargestellt, das als erste Antriebseinheit einen Verbrennungsmotor 2 und als zweite Antriebseinheit einen Elektromotor 3 aufweist. Die Antriebseinheiten 2, 3 stellen im Betrieb als Ausgangsgrößen z.B. Antriebsmomente, d.h. Teilmomente bereit, wobei ein Fahrzeug (nicht gezeigt) mit einem gesamten Antriebsmoment angetrieben wird, dass sich im Wesentlichen aus der Summe der Teilmomente ergibt. Ein Fahrer des durch das Motorsystem 1 angetriebenen Fahrzeugs kann über eine Einstellvorrichtung, wie z.B. ein Fahrpedal 4, ein Fahrerwunschmoment FWM vorgeben, mit dem ein gesamtes Soll-Antriebsmoment, das von dem Motorsystem 1 dem Fahrzeug bereitgestellt werden soll, angegeben wird.

Das Fahrerwunschmoment FWM wird einer Begrenzungseinheit 5 zugeführt, die das Fahrerwunschmoment FWM auf ein der Begrenzungseinheit 5 vorgegebenes Grenzantriebsmoment GM begrenzt. Das Grenzantriebsmoment GM bestimmt ein Verbrennungsmotor-Teilmoment, das der Verbrennungsmotor 2 im Normalbetrieb maximal bereitstellen soll. Das Grenzantriebsmoment GM entspricht einem Antriebsmoment, bei dem der Betrieb des Verbrennungsmotors 2 hinsichtlich eines oder mehrerer der folgenden Parameter Wirkungsgrad (Antriebsleistung bezüglich Verbrauch), Abgasemissionen, Verschleiß von Motorkomponenten und dgl. optimiert ist. Wird der Wirkungsgrad bei der Bestimmung des Grenzantriebsmomentes GM berücksichtigt, so kann das Grenzantriebsmoment GM etwa auf ein Antriebsmoment von 80 bis 90% des maximalen Antriebsmoments des Verbrennungsmotors 2 festgelegt werden, da dort üblicherweise ein Wirkungsgradmaximum eines Verbrennungsmotors liegt. Die Begrenzungseinheit 5 weist weiterhin einen Eingang zum Empfangen eines Begrenzungssignals BG auf, der zum Aktivieren der Begrenzung oder Deaktivieren der Begrenzung des Fahrerwunschmoments FWM vorgesehen ist.

Das Fahrerwunschmoment FWM und das am Ausgang der Begrenzungseinheit 5 ausgegebene, begrenzte (oder entsprechend dem Begrenzungssignal) nicht begrenzte Fahrerwunschmoment FWM' werden einem Differenzglied 6 zugeführt, um die Differenz zwischen dem angeforderten Fahrerwunschmoment FWM und dem begrenzten oder nicht begrenzten Fahrerwunschmoment FWM' zu ermitteln. Das Differenzmoment DM stellt bei Aktivieren der Begrenzungseinheit 5 ein Differenzmoment DM bereit, das bei im Fall, dass das Fahrerwunschmoment FWM das Grenzantriebsmoment GM überschreitet die Differenz zwischen dem Fahrerwunschmoment FWM und dem Grenzantriebsmoment GM angibt. Bei nicht aktivierter Begrenzungseinheit 5 beträgt das Differenzmoment DM 0.

Zum Betreiben des Motorsystems 1 ist eine Motormanagementeinheit 7 vorgesehen, die eine Angabe über Teilmomente, die von der jeweiligen Antriebseinheit, d.h. von dem Verbrennungsmotor 2 und dem Elektromotor 3 bereitgestellt werden sollen, je nach aktueller Antriebsstrategie bereitstellt. Die Motormanagementeinheit 7 bestimmt somit abhängig von dem Fahrerwunschmoment FWM das Verbrennungsmotor-Teilmoment VTM und das Elektromotor-Teilmoment ETM, so dass in Summe das gesamte geforderte Antriebsmoment zum Antreiben des Fahrzeugs geliefert wird. Die Motormanagementeinheit 7 kann dazu Angaben über Motorsystemzustände bzw. Fahrzeugzustände verwenden, wie z.B. den Ladezustand der elektrischen Energiequelle, z.B. einer Batterie, die den Elektromotor mit elektrischer Energie versorgt. Der Ladezustand der elektrischen Energiequelle gibt an, in welchen Maß die Batterie maximal belastet werden darf, und welche maximale Arbeit abgerufen werden kann. Der Zustand der Batterie wird von einer Batteriemanagementeinheit 8 bereitgestellt. Die Batteriemanagementeinheit 8 bestimmt den Zustand der Batterie abhängig von dessen Ladezustand SOC und dessen Temperatur $T_{Bat}$ sowie weiteren Größen, wie z.B. der Batteriespannung $U_{Bat}$ und dgl.

Die Teilmomente TM können beispielsweise über einen Teilmomenten-Anteilsfaktor TM bezüglich des Fahrerwunschmomentes FWM bzw. des begrenzten Fahrerwunschmomentes FWM' angegeben werden, wie es in Fig. 1 dargestellt ist. Der Anteilsfaktor TM wird einer Ansteuereinheit 15 zugeführt. Die Ansteuereinheit 15 stellt eine Verbrennungsmotor-Ansteuergröße AWV und eine Elektromotor-Ansteuergröße AWE dem Verbrennungsmotor 2 bzw. dem Elektromotor 3 zur Verfügung, um das Verbrennungsmotor-Teilmoment bzw. das Elektromotor-Teilmoment bereitzustellen. Eine mögliche Berechnungsvorschrift kann sein:

$$AWV= FWM' * TM$$

$$AWE= FWM' * (1-TM) + DM$$

Alternativ kann die Motormanagementeinheit 7 die einzelnen Teilmomente auch als Absolutwerte angeben.

Es ist weiterhin eine Steuereinheit 9 vorgesehen, die ein Begrenzungssignal BG generiert, das an den Eingang der Begrenzungseinheit 5 zum Aktivieren bzw. Deaktivieren der Begrenzung angelegt wird. Die Steuereinheit 9 analysiert den Zustand des Fahrzeugs bzw. des Motorsystems und bestimmt, ob das Motorsystem im Normalbetrieb betrieben werden soll, d.h. in einem Betrieb, bei dem in jedem Fall das maximale vom Verbrennungsmotor 2 bereitzustellende Teilmoment auf das Grenzantriebsmoment GM reduziert wird, oder in einem weiteren Betriebszustand betrieben werden soll, bei dem die Begrenzung des Verbrennungsmotor-Teilmoment aufgehoben ist. Die Steuereinheit 9 stellt die Begrenzung oder das Aufheben der Begrenzung durch die Begrenzungseinheit 5 abhängig von einem oder mehreren der folgenden Fahrzustände ein.

1. Der Fahrer betätigt das Fahrpedal schnell bis zum Anschlag und führt dadurch einen so genannten Kickdown aus. In diesem Fall wird angenommen, dass der Fahrer das maximal mögliche Antriebsmoment des Motorsystems 1 abrufen möchte und benötigt somit sowohl das maximal mögliche Antriebsmoment des Verbrennungsmotors 2 als auch das maximal mögliche Antriebsmoment des Elektromotors 3. In diesem Fall wird also die Begrenzungseinheit 5 deaktiviert, so dass keine Begrenzung des Fahrerwunschmoments FWM vorgenommen wird. Der Kickdown wird festgestellt, wenn das Fahrpedal eine Anschlagsposition erreicht hat und der zeitliche Verlauf der Fahrpedalstellung bis zum Erreichen der Anschlagsposition mindestens einen Gradienten aufweist, der vorgebbar ist. Ein Kickdown wird beispielsweise festgestellt, wenn ein Fahrer von einer Fahrpedalstellung, die einer halben Maximalauslenkung des Fahrpedals entspricht, das Fahrpedal vollständig durchtritt. Der Kickdown wird mithilfe einer Kickdown-Erkennungseinheit 10 erkannt, der das Fahrerwunschmoment FWM zugeführt wird. Die Kickdown-Erkennungseinheit 10 führt also die Abfragen aus, ob die Maximalauslenkung des Fahrpedals erreicht worden ist und ob der Gradient der Änderung der Fahrpedalauslenkung den bestimmten Schwellwert übersteigt.

2. Weiterhin kann ein manuell bedienbares Eingabeelement 11 vorgesehen sein, z.B. in Form eines manuell bedienbaren Schalters im Cockpit des Fahrzeugs, dessen Schalterstellung angibt, dass eine Begrenzung des von dem Verbrennungsmotor 2 geforderten Antriebsmoments vorgenommen werden soll oder nicht.

3. Es kann weiterhin vorgesehen sein, das Aufheben des über dem Grenzantriebsmoment GM befindlichen Antriebsmomentenbereich für den Verbrennungsmotor 2 abhängig von der Fahrzeuggeschwindigkeit v zuzulassen oder nicht. Beispielsweise kann es bei hohen Geschwindigkeiten des Fahrzeugs (Geschwindigkeit des Fahrzeugs größer als eine vorgeschlagene Schwellengeschwindigkeit) nicht notwendig sein, ein hohes zusätzliches Antriebsmoment z.B. für einen Überholvorgang zur Verfügung zu stellen, da Überholvorgänge bei hohen Geschwindigkeiten v nicht sicherheitsrelevant sind. Dagegen können bei niedrigeren Geschwindigkeiten v hohe Beschleunigungen sicherheitsrelevant sein z. B. zum Verlassen einer Kreuzung oder zum Umfahren eines stehenden Hindernisses bei entgegenkommendem Verkehr.

4. Weiterhin kann eine Timer-Einheit 12 vorgesehen sein, die sicherstellt, dass die zeitliche Dauer der negativen Auswirkung einer Deaktivierung der Begrenzung z.B. aufgrund der o.a. Fahrzeugzustände, wie schlechter Wirkungsgrad, höhere Abgasemissionen oder höheren Verschleiß, minimiert wird. Dies wird erreicht, indem die Deaktivierung der Begrenzung in der Begrenzungseinheit 5 zeitlich begrenzt wird. Dazu stellt die Timer-Einheit 12 der Steuereinheit 9 ein Zeitsignal zur Verfügung, so dass die Steuereinheit 9 abhängig von der Fahrzeugsituation bzw. dem Zustand des Motorsystems feststellen kann, ob die Deaktivierung der Begrenzung beendet werden soll. Es sollte jedoch in der Steuereinheit 9 überprüft werden, ob die zeitliche Begrenzung des Deaktivierens der Begrenzung durch die Begrenzungseinheit 5 nicht zu einer Behinderung eines Beschleunigungsvorgangs z.B. bei einem Kickdown führt, so dass für bei einem erkannten Kickdown die Zeitdauer, während der die Begrenzung aufgehoben wird, verlängert wird.

5. Weiterhin kann die Steuereinheit 9 mit dem Verbrennungsmotor 2 verbunden sein, um Angaben über die Drehzahl n der Antriebswelle des Antriebssystems und dessen Lastmoment M zu empfangen, so dass erkannt werden kann, ob eine besondere Fahrzeugsituation vorliegt, wie z.B. eine Bergfahrt mit Anhänger. Eine solche Situation kann durch ein stark erhöhtes Lastmoment außerhalb des üblichen Lastmomentenbereichs erkannt werden, indem festgestellt wird, dass das hohe Lastmoment in einem Fahrzeugzustand vorliegt, bei dem das Fahrzeug keine oder nur eine sehr geringe Beschleunigung ausführt. In diesem Fall kann ebenfalls vorgesehen sein, die Begrenzung durch die Begrenzungseinheit 5 zu deaktivieren, d.h. freizugeben, wenn eine Drehzahl des Verbrennungsmotors unterhalb eines Drehzahlschwellwerts und eine Last an dem Motorsystem festgestellt wird, die größer ist als ein Lastschwellwert. Dadurch kann dem Fahrer zusätzlicher Spielraum für eine Erhöhung bzw. ein Beibehalten der Geschwindigkeit des Fahrzeugs bereitgestellt werden.

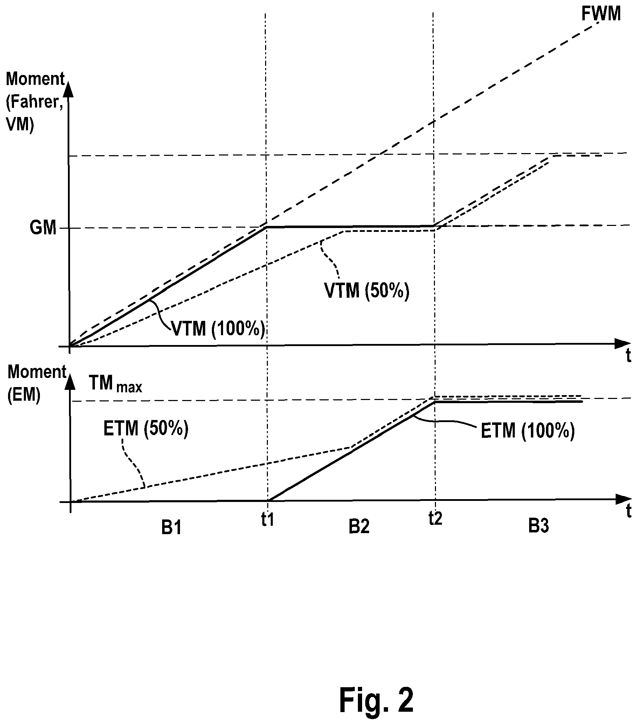

In Fig. 2 ist dargestellt, wie die Motormanagementeinheit 7 das gesamte Antriebsmoment aus dem Verbrennungsmotor-Teilmoment VTM und dem Elektromotor-Teilmoment ETM zusammensetzt. Fig. 2 zeigt einen Betrieb des Fahrzeugs, bei dem der Fahrer ein kontinuierlich anwachsendes Fahrerwunschmoment bereitstellt und die Motormanagementeinheit 7 ein Teilmomenten-Anteilsfaktor von TM = 100% vorgibt (Teilmomente als durchgezogene Linien dargestellt), was beispielsweise bei einem niedrigen Ladezustand der Batterie der Fall sein kann. Man erkennt, dass in einem ersten Bereich B1 bei niedrigeren angeforderten Fahrwunschmomenten FWM das von dem Verbrennungsmotor 2 bereitgestellte Antriebsmoment im Wesentlichen dem Fahrerwunschmoment FWM entspricht. In dem Bereich B1 stellt der Elektromotor 3 keinen Beitrag zu dem gesamten Antriebsmoment zur Verfügung.

Bei Erreichen des Grenzantriebsmomentes GM wird trotz sich weiter erhöhendem Fahrerwunschmoment FWM das von dem Verbrennungsmotor 2 geforderte Antriebsmoment nicht weiter erhöht (siehe Bereich B2). Stattdessen wird ein weiteres Teilmoment zur Verfügung gestellt, das von dem Elektromotor 3 angefordert wird. Abhängig von dem Zustand der elektrischen Energiequelle für den Elektromotor 3 kann das Elektromotor-Teilmoment ETM nur bis zu einem maximalen Teilantriebsmoment $TM_{max}$ erhöht werden.

Ist das maximale Teilantriebsmoment $TM_{max}$ erreicht, so kann eine weitere Erhöhung des gesamten Antriebsmoments gemäß dem weiter über die Zeit ansteigenden Fahrerwunschmoment FWM nur durch Überschreiten des Grenzantriebsmoments GM durch das Verbrennungsmotor-Teilmoment VTM erreicht werden. Ob das gesamte Antriebsmoment entsprechend dem weiter ansteigenden Fahrerwunschmoment FWM in dem Bereich B3 weiter erhöht wird, ist jedoch abhängig von den Zuständen des Fahrzeugs bzw. des Motorsystems, was in der Steuereinheit 9 bestimmt wird. Wird festgestellt, dass die Begrenzung aufgehoben werden soll, so wird das über das Grenzantriebsmoment GM hinausgehende, vom Verbrennungsmotor 2 zusätzlich angeforderte Antriebsmoment freigegeben und der Verbrennungsmotor 2 entsprechend angesteuert.

Das von der Steuereinheit 9 bereitgestellte Begrenzungssignal BG hängt also in erheblichem Maße von dem Fahrerwunschmoment FWM ab, insofern, dass im Normalbetrieb, d.h. bei in einem unteren Bereich des geforderten Fahrerwunschmomentes FWM in jedem Fall das von dem Verbrennungsmotor 2 bereitgestellte Antriebsmoment auf das Grenzantriebsmoment GM begrenzt ist, erst wenn der Verbrennungsmotor 2 ein Antriebsmoment in Höhe des Grenzantriebsmoments GM bereitstellt und ein höheres Antriebsmoment von dem Elektromotor 3 als das Maximalantriebsmoment $TM_{max}$ z.B. aufgrund des Ladungszustands der elektrischen Energiequelle nicht bereitgestellt werden kann, wird bestimmt, ob ein weiterer Anteil des Antriebsmoments über das Grenzantriebsmoment GM hinaus zusätzlich von dem Verbrennungsmotor 2 bereitgestellt werden soll und der bezüglich mindestens eines Aspektes optimierte Betriebszustand verlassen werden soll.

Gestrichelt sind die Verläufe der Teilmomente VTM, ETM bei einem Teilmomenten-Anteilsfaktor TM von 50% dargestellt. Im Gegensatz zu den in Fig. 2 dargestellten Verläufen der Teilmomente VTM, ETM kann der Beitrag des Elektromotors 2 bereits innerhalb des Bereiches B1 vorgesehen werden.

Weiterhin könnte vorgesehen sein, dass bei einem kalten Verbrennungsmotor 2 (unterhalb einer bestimmten Temperaturschwelle) der Anteil des von dem Elektromotor 3 bereitgestellten Elektromotor-Teilmoment ETM größer ist als bei einem warmen Motor. Mit anderen Worten die Motormanagementeinheit 7 kann zur Bereitstellung des Fahrerwunschmomentes FWM in den Bereichen B1 und B2 jede beliebige Kombination eines Verbrennungsmotor-Teilmoments VTM innerhalb des Bereiches von 0 bis dem Grenzantriebsmoment GM und einem Elektromotor-Teilmoment ETM von 0 bis zu einem maximalen abhängig von dem Zustand der elektrischen Energiequelle bereitstellbaren Antriebsmoment zusammensetzen. Oberhalb des sich daraus ergebenden gesamten maximalen Antriebsmoments kann ein weiterer Anteil des Antriebsmoments von dem Verbrennungsmotor 2 bereitgestellt werden, der dazu führt, dass als Verbrennungsmotor-Teilantriebsmoments VTM ein Antriebsmoment bereitgestellt wird, das größer ist als das Grenzantriebsmoment GM. Ein Betrieb in diesem Bereich B3 wird jedoch nur zugelassen, wenn vordefinierte, z.B. die oben definierten Motorzustände bzw. Fahrzeugzustände vorliegen.

Um bei z.B. einer Fahrt mit konstanter Geschwindigkeit zu gewährleisten, dass keine Geschwindigkeitsänderung während des Fahrens auftreten, kann bei einem Fahrerwunschmoment FWM in dem Bereich B2 vorgesehen sein, dass bei einer abnehmenden Batteriekapazität und ein dadurch abnehmendes Elektromotor-Teilmoment vorgesehen sein, dass, wenn das geforderte Fahrerwunschmoment FWM nicht mehr durch das Grenzantriebsmoment GM des Verbrennungsmotors 2 und das Maximalantriebsmoment $TM_{max}$ des Elektromotors 3 bereitgestellt werden kann, die Begrenzung aufgehoben wird und das zusätzliche notwendige Antriebsmoment vom Verbrennungsmotor 2 bereitgestellt wird, wodurch der Verbrennungsmotor 2 außerhalb bzw. oberhalb des optimierten, durch das Grenzantriebsmoment GM definierten Betriebspunkt betrieben wird.

Grundsätzlich können auch mehrere Grenzantriebsmomente abhängig von verschiedenen Parametern bezüglich dessen der Betrieb des Verbrennungsmotors optimiert ist, vorgesehen werden. Bei mehreren Grenzantriebsmomenten kann beispielsweise ein Kickdown die Begrenzung vollständig aufheben, während ein Ladewunsch der Batteriemanagementeinheit 8 zu keinem vollständigen Aufheben der Begrenzung des Antriebsmoments des Verbrennungsmotors führt, sondern nur zur einer Begrenzung auf ein weiteres höheres Grenzantriebsmoment, das unter dem maximal möglichen Antriebsmoment des Verbrennungsmotor 2 liegt, bewirkt.

Das oben beschriebene Verfahren basiert auf einer Betrachtung der von dem Antriebseinheiten 2, 3 bereitgestellten Antriebsmomenten. Es kann jedoch auch auf bereitgestellten Antriebsleistungen basieren oder von den Antriebsmomenten oder den Antriebsleistungen abhängigen Größen.

**Patentansprüche**

1. Verfahren zum Betreiben eines hybriden Motorsystems (1) mit einer ersten Antriebseinheit (2), insbesondere einem Verbrennungsmotor, und einer zweiten Antriebseinheit (3), insbesondere einem Elektromotor, mit folgenden Schritten:

- Ansteuern der ersten Antriebseinheit (2) und der zweiten Antriebseinheit (3), so dass die erste Antriebseinheit (2) und die zweite Antriebseinheit (3) jeweils eine Ausgangsgröße (VTM, ETM) bereitstellen, um eine Gesamtausgangsgröße bereitzustellen;
- Begrenzen der von der ersten Antriebseinheit (2) bereitgestellten Ausgangsgröße (VTM) auf einen Grenzwert (GM), der kleiner ist als eine maximal von der ersten Antriebseinheit (2) bereitstellbare Ausgangsgröße ,
- Aufheben des Begrenzens, wenn die von der zweiten Antriebseinheit (3) bereitgestellte Ausgangsgröße (ETM) einer maximalen von der zweiten Antriebseinheit (3) bereitstellbaren Ausgangsgröße entspricht, **dadurch gekennzeichnet, dass** die Zeitdauer des Aufhebens des Begrenzens auf eine Maximalzeitdauer festgelegt wird.

2. Verfahren nach Anspruch 1 oder 2, wobei der Grenzwert (GM) bezüglich eines Betriebsaspektes der ersten Antriebseinheit (2) optimiert ist, wobei der Betriebsaspekt einen Wirkungsgrad und/oder eine Abgasemissionsrate und/oder eine Verschleißrate des Motorsystems (1) umfasst.

3. Verfahren nach Anspruch 1 oder 2, wobei die maximale, von der zweiten Antriebseinheit (3) bereitstellbare Ausgangsgröße von einem Betriebszustand des Motorsystems (1), insbesondere einem Ladungszustand einer elektrischen Energiequelle, abhängt.

4. Verfahren nach einem der Ansprüche 1 bis 3, wobei das Ansteuern der ersten Antriebseinheit (2) und der zweiten Antriebseinheit (3) gemäß einer Motormanagementstrategie so durchgeführt wird, dass die Motormanagementstrategie eine Angabe über ein Verhältnis der Ausgangsgrößen (VTM, ETM) zueinander bereitstellt, wobei die Motormanagementstrategie einen Ladungszustand einer elektrischen Energiequelle berücksichtigt.

5. Verfahren nach einem der Ansprüche 1 bis 4, wobei das Begrenzen abhängig von einem oder mehreren Betriebszuständen des Motorsystems (1) und/oder einer externen Bedingung aufgehoben wird.

6. Verfahren nach Anspruch 5, wobei der Betriebszustand zum Aufheben des Begrenzens vorliegt, wenn ein Kickdown festgestellt wird, bei dem ein Fahrpedal eines mit dem Motorsystem (1) ausgestatteten Fahrzeug mindestens mit einer vorbestimmten Änderungsgeschwindigkeit vollständig ausgelenkt wird.

7. Verfahren nach Anspruch 5 oder 6, wobei der Betriebszustand zum Aufheben des Begrenzens vorliegt, wenn eine Drehzahl der ersten Antriebseinheit (2) unterhalb eines Drehzahlschwellwerts und eine Last an dem Motorsystem (1) festgestellt werden, die größer ist als ein Lastschwellwert.

8. Verfahren nach Anspruch einem der Ansprüche 1 bis 7, wobei die Maximalzeitdauer abhängig von dem einen oder den mehreren Betriebszuständen festgelegt wird.

9. Verfahren nach einem der Ansprüche 1 bis 8, wobei die Ausgangsgröße der jeweiligen Antriebseinheit einem Antriebsmoment, einer Antriebsleistung oder einer davon abhängigen Größe entspricht.

10. Vorrichtung zum Betreiben eines hybriden Motorsystems (1), das eine erste Antriebseinheit (2), insbesondere einem Verbrennungsmotor, und eine zweite Antriebseinheit (3), insbesondere einem Elektromotor, aufweist, wobei die Vorrichtung umfasst:

- eine Motormanagementeinheit (7), die ausgebildet ist, um die erste Antriebseinheit (2) und die zweite Antriebseinheit (3) anzusteuern, so dass die erste Antriebseinheit (2) und die zweite Antriebseinheit (3) jeweils eine Ausgangsgröße (VTM, ETM) bereitstellen, um eine Gesamtausgangsgröße bereitzustellen;
- eine Begrenzungseinheit, um das von der ersten Antriebseinheit (2) bereitgestellte Ausgangsgröße auf einen Grenzwert (GM) zu begrenzen, der kleiner ist als eine maximal von der ersten Antriebseinheit (2) bereitstellbare Ausgangsgröße,
- eine Steuereinheit (9), die mit der Begrenzungseinheit (5) gekoppelt ist, um das Begrenzen abhängig von einem oder mehreren Betriebszuständen des Motorsystems (1) und/oder einer externen Bedingung aufzuheben, wenn die von der zweiten Antriebseinheit (3) bereitgestellte Ausgangsgröße (ETM) einer maximalen, von der zweiten Antriebseinheit (3) bereitstellbaren Ausgangsgröße entspricht, **dadurch gekennzeichnet, dass** die Zeitdauer des Aufhebens des Begrenzens auf eine Maximalzeitdauer festgelegt wird.

11. Motorsystem (1) mit einer ersten Antriebseinheit (2), mit einer zweiten Antriebseinheit (3) und mit einer Vorrichtung nach Anspruch 10.

12. Fahrzeug mit einem Motorsystem (1) nach Anspruch 11.

## Claims

1. Method for operating a hybrid motor system (1) with a first drive unit (2), in particular an internal combustion engine, and a second drive unit (3), in particular an electric motor, comprising the following steps:

    - actuating the first drive unit (2) and the second drive unit (3) so that the first drive unit (2) and the second drive unit (3) each make available an output variable (VTM, ETM), in order to make available a total output variable;
    - limiting the output variable (VTM) made available by the first drive unit (2) to a limiting value (GM) which is less than a maximum output variable which can be made available by the first drive unit (2),
    - cancelling the limiting if the output variable (ETM) which is made available by the second drive unit (3) corresponds to a maximum output variable which can be made available by the second drive unit (3), **characterized in that** the time period of the cancelling of the limiting is defined as a maximum time period.

2. Method according to Claim 1 or 2, wherein the limiting value (GM) is optimized with respect to an operating aspect of the first drive unit (2), wherein the operating aspect comprises an efficiency level and/or an exhaust gas emission rate and/or a wear rate of the motor system (1).

3. Method according to Claim 1 or 2, wherein the maximum output variable which can be made available by the second drive unit (3) depends on an operating state of the motor system (1), in particular a state of charge of an electric energy source.

4. Method according to one of Claims 1 to 3, wherein the actuation of the first drive unit (2) and of the second drive unit (3) is carried out according to a motor management strategy in such a way that the motor management strategy makes available information about a ratio of the output variables (VTM, ETM) with respect to one another, wherein the motor management strategy takes into account a state of charge of an electric energy source.

5. Method according to one of Claims 1 to 4, wherein the limiting is cancelled as a function of one or more operating states of the motor system (1) and/or an external condition.

6. Method according to Claim 5, wherein the operating state for the cancelling of the limiting is present if a kickdown is detected in which an accelerator pedal of a vehicle which is equipped with the motor system (1) is completely deflected at least with a predetermined rate of change.

7. Method according to Claim 5 or 6, wherein the operating state for the cancelling of the limiting is present if a rotational speed of the first drive unit (2) below a rotational speed threshold value and a load on the motor system (1) which is higher than a load threshold value are detected.

8. Method according to one of Claims 1 to 7, wherein the maximum time period is defined as a function of the one operating state or the plurality of operating states.

9. Method according to one of Claims 1 to 8, wherein the output variable of the respective drive unit corresponds to a drive torque, a drive power or a variable dependent thereon.

10. Device for operating a hybrid motor system (1) which has a first drive unit (2), in particular an internal combustion engine, and a second drive unit (3), in particular an electric motor, wherein the device comprises:

    - a motor management unit (7) which is designed to actuate the first drive unit (2) and the second drive unit (3) so that the first drive unit (2) and the second drive unit (3) each make available an output variable (VTM, ETM), in order to make available a total output variable;
    - a limiting unit in order to limit the output variable made available by the first drive unit (2) to a limiting value (GM) which is lower than a maximum output variable which can be made available by the first drive unit (2),
    - a control unit (9) which is coupled to the limiting unit (5) in order to cancel the limiting as a function of one or more operating states of the motor system (1) and/or of an external condition if the output variable (ETM) which is made available by the second drive unit (3) corresponds to a maximum output variable which can be made available by the second drive unit (3), **characterized in that** the time period of the cancelling of the limiting is defined as a maximum time period.

11. Motor system (1) having a first drive unit (2), having a second drive unit (3) and having a device according to Claim 10.

12. Vehicle having a motor system (1) according to Claim 11.

## Revendications

1. Procédé de fonctionnement d'un système de moteur hybride (1) comprenant une première unité d'entraînement (2), en particulier un moteur à combustion interne, et une deuxième unité d'entraînement (3), en particulier un moteur électrique, comprenant les étapes suivantes :

   - commande de la première unité d'entraînement (2) et de la deuxième unité d'entraînement (3) de telle sorte que la première unité d'entraînement (2) et la deuxième unité d'entraînement (3) fournissent chacune une grandeur initiale (VTM, ETM) afin de fournir une grandeur initiale totale ;
   - limitation de la grandeur initiale (VTM) fournie par la première unité d'entraînement (2) à une valeur limite (GM) qui est inférieure à une grandeur initiale pouvant être fournie au maximum par la première unité d'entraînement (2),
   - suppression de la limitation si la grandeur initiale (ETM) fournie par la deuxième unité d'entraînement (3) correspond à une grandeur initiale maximale pouvant être fournie par la deuxième unité d'entraînement (3), **caractérisé en ce que** la durée de la suppression de la limitation est fixée à une durée maximale.

2. Procédé selon la revendication 1 ou 2, dans lequel la valeur limite (GM) est optimisée par rapport à un aspect de fonctionnement de la première unité d'entraînement (2), l'aspect de fonctionnement comprenant un rendement et/ou un taux d'émission de gaz d'échappement et/ou un taux d'usure du système de moteur (1).

3. Procédé selon la revendication 1 ou 2, dans lequel la grandeur initiale maximale pouvant être fournie par la deuxième unité d'entraînement (3) dépend d'un état de fonctionnement du système de moteur (1), en particulier d'un état de charge d'une source d'énergie électrique.

4. Procédé selon l'une quelconque des revendications 1 à 3, dans lequel la commande de la première unité d'entraînement (2) et de la deuxième unité d'entraînement (3) est effectuée en fonction d'une stratégie de gestion de moteur de telle sorte que la stratégie de gestion de moteur fournisse une indication d'un rapport des grandeurs initiales (VTM, ETM) l'une par rapport à l'autre, la stratégie de gestion de moteur tenant compte d'un état de charge d'une source d'énergie électrique.

5. Procédé selon l'une quelconque des revendications 1 à 4, dans lequel la limitation est supprimée en fonction d'un ou plusieurs états de fonctionnement du système de moteur (1) et/ou d'une condition externe.

6. Procédé selon la revendication 5, dans lequel l'état de fonctionnement pour la suppression de la limitation survient lorsque l'on constate un état de pied au plancher, dans lequel une pédale d'accélérateur d'un véhicule muni du système de moteur (1) est complètement enfoncée avec une vitesse de variation prédéterminée.

7. Procédé selon la revendication 5 ou 6, dans lequel l'état de fonctionnement pour la suppression de la limitation survient lorsque l'on constate une vitesse de rotation de la première unité d'entraînement (2) en dessous d'une valeur seuil de vitesse de rotation et une charge appliquée au système de moteur (1) supérieure à une valeur de seuil de charge.

8. Procédé selon l'une quelconque des revendications 1 à 7, dans lequel la durée maximale est établie en fonction du ou des états de fonctionnement.

9. Procédé selon l'une quelconque des revendications 1 à 8, dans lequel la grandeur initiale de l'unité d'entraînement respective correspond à un couple d'entraînement, une puissance d'entraînement ou une grandeur en dépendant.

10. Dispositif pour faire fonctionner un système de moteur hybride (1) qui présente une première unité d'entraînement (2), en particulier un moteur à combustion interne, et une deuxième unité d'entraînement (3), en particulier un moteur électrique, le dispositif comprenant :

   - une unité de gestion de moteur (7) qui est réalisée pour commander la première unité d'entraînement (2) et la deuxième unité d'entraînement (3) de telle sorte que la première unité d'entraînement (2) et la deuxième unité d'entraînement (3) fournissent chacune une grandeur initiale (VTM, ETM) afin de fournir une grandeur initiale totale ;
   - une unité de limitation afin de limiter la grandeur initiale fournie par la première unité d'entraînement (2) à une valeur limite (GM) qui est inférieure à une grandeur initiale pouvant être fournie au maximum par la première unité d'entraînement (2),
   - une unité de commande (9) qui est accouplée à l'unité de limitation (5) afin de supprimer la limitation en fonction d'un ou de plusieurs états de fonctionnement du système de moteur (1) et/ou d'une condition externe, lorsque la grandeur initiale (ETM) fournie par la deuxième unité d'entraînement (3) correspond à une grandeur initiale maximale pouvant être fournie par la deuxième unité d'entraînement (3), **caractérisé**

17　　　　　**EP 2 334 531 B1**　　　　　18

**en ce que** la durée de la suppression de la limitation est fixée à une durée maximale.

11. Système de moteur (1) comprenant une première unité d'entraînement (2), une deuxième unité entraînement (3) et un dispositif selon la revendication 10.

12. Véhicule comprenant un système de moteur (1) selon la revendication 11.

**10**

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007002734 A1
- DE 102006007983 A1